## Europäisches Patentamt
## European Patent Office
## Office européen des brevets

(19)

(11) Publication number: **0 048 910**
**B1**

(12)

# EUROPEAN PATENT SPECIFICATION

(45) Date of publication of patent specification: **31.07.85**

(51) Int. Cl.⁴: **C 10 L 1/30, C 10 L 1/28**

(21) Application number: **81107433.5**

(22) Date of filing: **18.09.81**

(54) **Protective coatings for the high temperature zones of engines.**

(30) Priority: **29.09.80 US 192066**

(43) Date of publication of application:
**07.04.82 Bulletin 82/14**

(45) Publication of the grant of the patent:
**31.07.85 Bulletin 85/31**

(84) Designated Contracting States:
**AT BE CH DE FR IT LI LU NL SE**

(56) References cited:
**DE-A-1 962 714**
**GB-A- 773 169**
**US-A-2 151 432**
**US-A-2 529 496**
**US-A-2 902 983**

(73) Proprietor: **GREAT LAKES CARBON CORPORATION**
**299 Park Avenue**
**New York, NY 10171 (US)**

(72) Inventor: **Prescott, Roger**
**5 Tallapoosa Road**
**Johnson City Tennessee (US)**

(74) Representative: **Baillie, Iain Cameron et al**
**c/o Ladas & Parry Isartorplatz 5**
**D-8000 München 2 (DE)**

## Description

This invention provides a method for maintaining a protective silicon carbide coating on the exposed surfaces of a carbon-carbon composite component in the high temperature zone of an engine during operation thereof.

Components used in high temperature environments, such as those encountered in the high temperature zones (e.g., combustion chambers, turbine sections and exhaust ports) of jet engines, rocket motors and the like, often must be protected from destructive reaction with oxygen and/or the products of fuel combustion. This is conventionally accomplished by coating the portion of the component exposed to the high temperature atmosphere with a non-reactive material such as a refractory oxide, carbide or silicate.

Considerable effort is being expended in attempts to increase both the operating temperatures and service life of existing coatings. The principal barriers to improvements in performance of such coatings are loss of thickness resulting from volatilization and cracking and spalling of the coating caused by differences in thermal expansion between the coating and the coated surface.

Damage to the protective coating of a component of an engine, if not immediately corrected, will result in loss of the component, which often causes loss of the engine, and ultimately loss of the vehicle powered by the engine.

It is an objective of the invention to overcome the inadequacies of the prior art means for maintaining a protective silicone carbide coating on carbon-carbon composite components of engine exposed to destructive, high temperature atmospheres.

In accordance with the invention there is provided a method for maintaining a protective silicon carbide coating on the exposed surfaces of a carbon-carbon composite component in the high temperature zone of an engine during operation thereof characterized by introducing into said engine's fuel an effective amount of a silicon-containing compound soluble in said fuel and capable of being oxidized to $SiO_2$ when the fuel is combusted.

Although the discovery is not bound by theory, it appears that the excess of oxygen known to be present during fuel combustion results in an atmosphere in which an aerosol of liquid droplets or a vapor of an oxygen-containing compound, for example oxides or mixed oxides, is created from the appropriate additive. The compound then deposits as a coating on the hot engine components. The concentration of the fuel additive is controlled to attain the desired coating rate.

Non-limiting examples of silicon containing compounds that are suitable as fuel additives in the method of the invention are tetraethyl silane, propyltriethoxy silane and tetraphenyl silane.

The following example will further describe the invention. It is understood that this example is provided to illustrate the practice of the invention and is not intended as limiting beyond the limitations imposed by the appended claims.

Carbon-carbon composite components generally prepared by heat-treating a formed mixture of carbon or graphite fibers and phenolic, pitch (from coal tar, petroleum, PVC, etc.) or like polymers are well known in the art. Although durable at relatively high temperatures in neutral or reducing atmospheres, such composite components begin to fail because of oxidation at the temperatures generated in a jet engine. For this reason, carbon-carbon composite components exposed to such an environment require a protective coating.

A coating of silicon carbide (SiC) has proven successful for protecting carbon-carbon composite engine components at moderately high temperatures. However, at higher operating temperatures and atmospheric conditions found in the high temperature zone of a jet engine, the thickness of the SiC coating is observed to diminish to a point which causes failure of the composite component. This destruction is caused by volatilization of $SiO_2$, which is formed as a thin layer by oxidation of the surface of the SiC layer exposed to the combustion products and excess oxygen. This $SiO_2$ layer protects the underlying SiC coating until the layer is volatilized and a new layer of $SiO_2$ is formed by oxidation of the outermost region of the SiC coating. This is a continuous process which ultimately results in destruction of the SiC coating and the composite component.

To protect an SiC-coated carbon-carbon composite component of a turbine section of a jet engine during operation, an effective amount of a silicon-containing compound soluble in jet fuel, tetraethyl silane, is added to the fuel to maintain the $SiO_2$ layer, thereby protecting the SiC coating of the component. The high temperature atmosphere of the combustion zone of the engine is strongly oxidizing and $SiO_2$ is therefore formed from the tetraethyl silane, and continuously replenishes the volatilized $SiO_2$ on the surface of the SiC coating. The concentration of the additive is adjusted to obtain a low rate of deposition to ensure a replenishing and "self-healing" action.

## Claims

1. A method for maintaining a protective silicon carbide coating on the exposed surfaces of a carbon-carbon composite component in the high temperature zone of an engine during operation thereof characterized by introducing into said engine's fuel an effective amount of a silicon-containing compound soluble in said fuel and capable of being oxidized to $SiO_2$ when the fuel is combusted.

2. A method according to claim 1, characterized by the fact that the silicon-containing compound is tetraethyl silane.

3. A method according to claim 1 or 2, characterized by the fact that the component in the high temperature zone is a turbine section of a jet engine during operation thereof.

**Patentansprüche**

1. Verfahren zum Aufrechterhalten eines Schutzüberzuges aus Siliciumcarbid auf den freiligenden Flächen eines Kohlenstoff-Kohlenstoff-Verbundkörpers in der Hochtemperaturzone einer Wärmekraftmaschine während des Betriebes derselben, dadurch gekennzeichnet, daß in den Kraftstoff der Wärmekraftmaschine eine wirksame Menge einer siliciumhaltigen Verbindung eingeleitet wird, die in dem Kraftstoff löslich und geeignet ist, bei der Verbrennung des Kraftstoffs zu $SiO_2$ oxidiert zu werden.

2. Verfahren nach Anspruch 1, dadurch gekennzeichnet, daß die siliciumhaltige Verbindung Tetraethylsilan ist.

3. Verfahren nach Anspruch 1 oder 2, dadurch gekennzeichnet, daß der in der Hochtemperaturzone befindliche Körper der Turbinenteil eines Düsentriebwerks während des Betriebes desselben ist.

**Revendications**

1. Procédé pour le maintien d'un revêtement protecteur en carbure de silicium sur les surfaces exposées d'un composant composite carbone-carbone dans les zones à haute température d'un moteur pendant son fonctionnement, caractérisé en ce qu'on introduit dans le combustible dudit moteur une quantité efficace d'un composé contenant du silicium soluble dans ledit combustible et capable d'être oxydé en $SiO_2$ lorsque le combustible est brûlé.

2. Procédé selon la revendication 1, caractérisé par le fait que le composé contenant le silicium est le tétraéthylsilane.

3. Procédé selon la revendication 1 ou 2, caractérisé par le fait que le composant dans la zone de haute température est une section de turbine d'un moteur à réaction en fonctionnement.